# EUROPÄISCHE PATENTSCHRIFT

(11) **EP 1 687 186 B1**
(45) Veröffentlichungstag und Bekanntmachung des Hinweises auf die Patenterteilung: **16.05.2007**
(21) Anmeldenummer: 04819216.5
(22) Anmeldetag: 25.11.2004
(51) Int. Cl.: B60T 8/00

(54) **VERFAHREN UND VORRICHTUNG ZUR DURCHFÜHRUNG EINES BREMSVORGANGS**
METHOD AND DEVICE FOR CARRYING OUT A BRAKING PROCESS
PROCEDE ET DISPOSITIF D'EXECUTION D'UNE OPERATION DE FREINAGE

(30) Priorität: 26.11.2003 DE 10355218
(43) Veröffentlichungstag der Anmeldung: 09.08.2006
(73) Patentinhaber: DaimlerChrysler AG, 70327 Stuttgart (DE)
(72) Erfinder: REICHLE, Stephan, 75228 Ispringen (DE)
(86) Internationale Anmeldenummer: PCT/EP2004/013364
(87) Internationale Veröffentlichungsnummer: WO 2005/051737

(56) Entgegenhaltungen:
- EP-A- 0 537 874
- DE-A1- 3 838 536
- DE-A1- 3 932 569
- DE-A1- 4 340 442
- DE-A1- 10 135 020

## Beschreibung

Die Erfindung betrifft ein Verfahren und eine Vorrichtung zur Durchführung eines Bremsvorgangs zur Verminderung des Rucks des Fahrzeugs durch Nickbewegungen bei Erreichen des Stillstands, wobei eine die Soll-Fahrzeugverzögerung beschreibende Verzögerungsgröße verringert wird, wenn der Fahrzeugzustand während des Bremsvorgangs eine erste Zustandsbedingung erfüllt, und wobei die Verzögerungsgröße wieder erhöht wird, wenn der Fahrzeugzustand eine zweite Zustandsbedingung erfüllt.

Das Verfahren bzw. die Vorrichtung dienen dazu, den Komfort für die Fahrzeuginsassen am Ende eines Bremsvorgangs dadurch zu erhöhen, dass der Ruck des Fahrzeugs durch Nickbewegungen bei Erreichen des Stillstands gemindert wird.

Ein derartiges Verfahren bzw. eine derartige Vorrichtung sind aus der EP 0 537 874 A1 bekannt. Bei einem Bremsvorgang wird kurz vor Erreichen des Fahrzeugstillstands die Bremskraft auf einen Minimalwert heruntergeregelt. Das Erreichen einer sehr geringen Fahrzeuggeschwindigkeit kurz vor dem Fahrzeugstillstand erfüllt somit die erste Zustandsbedingung. Daher wird die Verzögerungsgröße - hier die Bremskraft - verringert. Sobald der Fahrzeugstillstand erkannt wurde, was die Erfüllung der zweiten Zustandsbedingung darstellt, wird die Bremskraft sprunghaft erhöht, um das Fahrzeug im Stillstand zu halten.

Aus der DE 101 35 020 A1 ist ein Verfahren und eine Vorrichtung zur Erkennung und Behebung der Umkippgefahr bekannt. Dabei werden die Einfederwege an den Vorder- und Hinterrädern ermittelt und daraus die Fahrzeugquerbeschleunigung und die zeitliche Änderung der Fahrzeugquerbeschleunigung berechnet, die dann zum Abgleich mit den Messsignalen eines Querbeschleunigungssensors verwendet werden. Bei nicht ausreichender Übereinstimmung wird das Verfahren zur Behebung der Umkippgefahr (ROP-Logik) ausgeschaltet. Bei erkannter Umkippgefahr können beispielsweise das maximal mögliche Motormoment reduziert und/oder die Reduzierung der Bremswirkung am kurvenäußeren Vorderrad untersagt werden.

Ausgehend vom beschriebenen Stand der Technik ist es eine Aufgabe der vorliegenden Erfindung das Verfahren bzw. die Vorrichtung zur Durchführung des Bremsvorgangs weiter zu verbessern und den Komfort für die Fahrzeuginsassen zu erhöhen.

Diese Aufgabe wird erfindungsgemäß durch die Merkmale des Patentanspruches 1 bzw. des Patentanspruches 6 gelöst.

Zumindest eine der beiden Zustandsbedingungen hängt vom Vorderachs-Einfederweg und/oder vom Hinterachs-Einfederweg ab. Dadurch kann der Zeitpunkt des Verringerns bzw. des erneuten Erhöhens der Verzögerungsgröße genauer auf die tatsächliche Nickbewegung des Fahrzeugs abgestimmt werden.

Vorteilhafte Weiterbildungen des Gegenstands der Erfindung ergeben sich aus den abhängigen Patenansprüchen.

Es ist vorteilhaft, wenn die erste Zustandsbedingung und/oder die zweite Zustandsbedingung von der Längsgeschwindigkeit des Fahrzeugs zum Zeitpunkt des Beginns des Bremsvorgangs abhängt. Alternativ oder zusätzlich kann die erste und/oder die zweite Zustandsbedingung von der Verzögerungsgröße abhängen. Durch diese Maßnahmen wird erreicht, dass der Zeitpunkt der Beeinflussung der Verzögerungsgröße an die konkreten Gegebenheiten des vorliegenden Bremsvorgangs angepasst ist. Hierdurch wird eine weitere Komforterhöhung erreicht.

Bei einer vorteilhaften Ausführung wird die Erfüllung der ersten und/oder zweiten Zustandsbedingung anhand eines vorgegebenen Kennfeldes ermittelt. Dies stellt eine einfach zu realisierende Maßnahme zur Prüfung der Zustandsbedingungen dar.

Es ist weiterhin vorteilhaft, wenn das Verringern der Verzögerungsgröße bei erfüllter erster Zustandsbedingung derart erfolgt, dass die Verzögerungsgröße einen stetigen oder differenzierbaren zeitlichen Verlauf aufweist. Dadurch wird der Komfort für die Fahrzeuginsassen bei der Beeinflussung der Verzögerungsgröße sicher gestellt.

Im Folgenden wird ein Ausführungsbeispiel des erfindungsgemäßen Verfahrens und der erfindungsgemäßen Vorrichtung anhand der Zeichnung näher erläutert. Dabei zeigen:
- Fig. 1: ein erstes Diagramm mit einem beispielhaften Verlauf des Vorderachs-Einfederweges und des Hinterachs-Einfederweges in Abhängigkeit von der Zeit und ein zweites Diagramm mit dem beispielhaften Verlauf der Längsgeschwindigkeit des Fahrzeugs und der Soll-Fahrzeugsverzögerung in Abhängigkeit von der Zeit und
- Fig. 2: ein Ausführungsbeispiel einer Vorrichtung zur Durchführung eines Bremsvorgangs als Blockschaltbild.

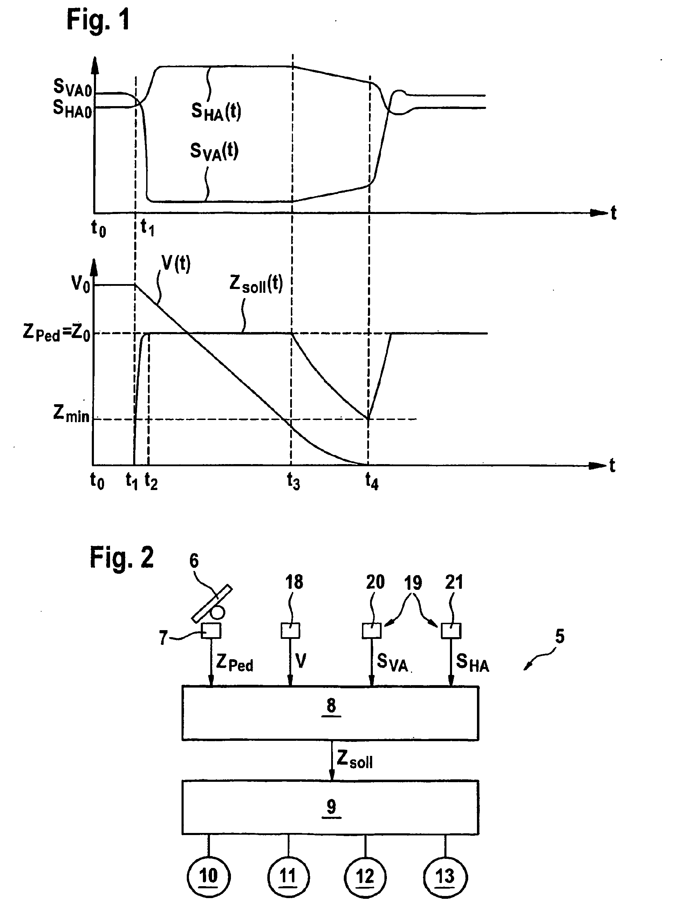

Fig. 2 zeigt eine Bremsvorrichtung 5, die zur Durchführung eines Bremsvorganges eines nicht mehr dargestellten Fahrzeugs dient. Anhand eines Bremspedals 6 kann der Fahrer des Fahrzeugs einen Verzögerungswunsch vorgeben, der über einen Bremspedalsensor 7 erfasst und las angeforderte Verzögerungsgröße z_{ped} an Verzögerungsbestimmungsmittel 8 übermittelt wird. Die Verzögerungsbestimmungsmittel 8 dienen zur Bestimmung einer Soll-Fahrzeugsverzögerung beschreibenden Verzögerungsgröße, die im vorliegenden Ausführungsbeispiel von der Soll-Fahrzeugverzögerung zₛₒₗₗ gebildet ist. Die Soll-Fahrzeugverzögerung zₛₒₗₗ wird an Bremsansteuermittel 9 übermittelt, die die Radbremseinrichtungen 10, 11, 12, 13 an der Vorder- bzw. an der Hinterachse des Fahrzeugs ansteuern, um die vorgegebene Soll-Fahrzeugverzögerung zₛₒₗₗ einzustellen.

Beim bevorzugten Ausführungsbeispiel gemäß Fig. 2 der Bremsvorrichtung 5 werden den Verzögerungsbestimmungsmitteln 8 weiterer Fahrzeugparameter und/oder Fahrzustandsparameter übermittelt, die zur Bestimmung der Soll-Fahrzeugverzögerung zₛₒₗₗ herangezogen werden. Die Längsgeschwindigkeit v des Fahrzeugs wird über einen Geschwindigkeitssensor 18 erfasst und an die Verzögerungsbestimmungsmittel 8 weitergeleitet. Des Weiteren ist beispielsgemäß eine Federwegsensoranordnung 19 mit einem Vorderachs-Einfederwegsensor 20 und einem Hinterachs-Einfederwegsensor 21 vorgesehen, die dem Vorderweg-Einfederweg s_{VA} und dem Hinterachs-Einfederweg s_{HA} erfasst und mittels entsprechender Signale an die Verzögerungsbestimmungsmittel 8 übermittelt.

Die Verzögerungsbestimmungsmittel 8 ermitteln anhand der Eingangssignale die Soll-Fahrzeugverzögerung zₛₒₗₗ derart, dass der durch Nickbewegungen des Fahrzeugs am Ende eines Bremsvorgangs für die Fahrzeuginsassen spürbaren Ruck vermindert bzw. vermieden ist. Hierfür wird die die Soll-Fahrzeugverzögerung zₛₒₗₗ beschreibende Verzögerungsgröße, die beispielsgemäß von der Soll-Fahrzeugverzögerung zₛₒₗₗ selbst gebildet ist, gemäß einem vorgegebenen zeitlichen Verlauf betragsmäßig verringert, wenn der Fahrzustand des Fahrzeugs während des Bremsvorgangs eine erste Zustandsbedingung erfüllt.

Die Überprüfung auf die Erfüllung der ersten Zustandsbedingung erfolgt beim Ausführungsbeispiel in den Verzögerungsbestimmungsmitteln 8 anhand der Längsgeschwindigkeit v, dem Vorderachs-Einfederweg s_{VA}, dem Hinterachs-Einfederweg s_{HA} und der durch den Fahrer über das Bremspedal 6 angeforderten Verzögerung. Bei dem hier beschriebenen Ausführungsbeispiel wurde anhand dieser Eingangsparameter in Fahrversuchen empirisch ermittelt, welche Werte diese Parameter annehmen müssen, damit die erste Zustandsbedingung erfüllt ist. In Abwandlung zum beschriebenen Ausführungsbeispiel ist es auch möglich, lediglich den Einfederweg an der Vorderachse oder an der Hinterachse für die Überprüfung der Zustandsbedingung heran zu ziehen. Auch weitere Fahrzeugparameter oder Fahrzustandsparameter wie Fahrzeugmasse, Radstand, Achslastverteilung oder dergleichen können bei der Ermittlung der Erfüllung der ersten Zustandsbedingung verwendet werden.

Es ist im Unterschied zur beschriebenen Ausführungsform auch möglich, anstelle des hinterlegten, empirisch ermittelten Kennfeldes ein mathematisches Modell zur Überprüfung der Erfüllung der ersten Zustandsbedingung zu verwenden, wie beispielsweise einen Filter oder eine mathematische Funktion.

In Fig. 1 ist beispielhaft der Verlauf eines Bremsvorgangs dargestellt. Das erste Diagramm zeigt den zeitlichen Verlauf des Vorderachs-Einfederwegs s_{VA} und des Hinterachs-Einfederwegs s_{HA}. Im zweiten Diagramm darunter ist der zeitliche Verlauf der Längsgeschwindigkeit v des Fahrzeugs und der Soll-Fahrzeugverzögerung zₛₒₗₗ gezeigt. Zu einem ersten Zeitpunkt t₀ beträgt der Vorderachs-Einfederweg s_{VA}=s_{VA0} und Hinterachs-Einfederweg s_{HA}=s_{HA0}. Das Fahrzeug fährt zu diesem ersten Zeitpunkt t₀ mit der Längsgeschwindigkeit v=v₀. Zu einem zweiten Zeitpunkt t₁ betätigt der Fahrer das Bremspedal 6. Die aus der angeforderten Fahrzeugverzögerung z_{ped}=z₀ in den Verzögerungsbestimmungsmitteln 8 ermittelte Soll-Fahrzeugverzögerung zₛₒₗₗ steigt ab dem zweiten Zeitpunkt t₁ steil an, erreicht zu einem dritten Zeitpunkt t₂ den angeforderten Wert Z_{ped}=z₀ und verläuft anschließend zunächst konstant. Die Längsgeschwindigkeit v verringert ab dem zweiten Zeitpunkt t₁ und verläuft ab dem dritten Zeitpunkt t₂ wegen der als konstant angenommenen Soll-Fahrzeugverzögerung zₛₒₗₗ in etwas linear. Aufgrund der durch die Verzögerung des Fahrzeugs verursachten dynamischen Achslastverteilung sinkt der Wert des Vorderachs-Einfederwegs s_{VA} nach dem zweiten Zeitpunkt t₁ ab, was einem Einfedern der Vorderachsfedern entspricht. Im Gegensatz dazu steigt der Wert des Hinterachs-Einfederwegs s_{HA} an, was einem Ausfedern der Hinterachsfedern entspricht. Solange während des Bremsvorgangs in etwas eine konstante Fahrzeugverzögerung anliegt, bleiben die Werte der beiden Einfederwegsignale in etwa konstant.

Aufgrund der zu Beginn des Bremsvorgangs zum zweiten Zeitpunkt t₁ vorliegenden Längsgeschwindigkeit v=v₀, der aktuell vorliegenden Soll-Fahrzeugsverzögerung zₛₒₗₗ die der angeforderten Verzögerung z_{ped} entspricht, des Vorderachs-Einfederwegs s_{VA} und des Hinterachs-Einfederwegs s_{HA} wird zu einem vierten Zeitpunkt t₃ anhand des hinterlegten Kennfeldes festgestellt, dass die erste Zustandsbedingung erfüllt ist. Die von den Verzögerungsbestimmungsmitteln 8 ermittelte Soll-Fahrzeugverzögerung zₛₒₗₗ wird ab diesem vierten Zeitpunkt t₃ bis zu einem vorgegebenen Mindestverzögerungswert zₘᵢₙ gemäß einem vorgegebenen zeitlichen Verlauf verringert. Bei diesem vorgegebenen zeitlichen Verlauf kann es sich beispielsweise um einen e-funktionsähnlichen Verlauf handeln. Es versteht sich, dass als vorgegebene zeitliche Funktion für das Absenken der Soll-Fahrzeugverzögerung zₛₒₗₗ auch jede beliebige andere zeitliche Funktion herangezogen werden könnte. Es ist dabei für die Fahrzeuginsassen komfortabel, wenn die Soll-Fahrzeugverzögerung zₛₒₗₗ zum Zeitpunkt der Erfüllung der ersten Zustandsbedingung - hier zum vierten Zeitpunkt t₃ - einen stetigen oder differenzierbaren Verlauf aufweist.

Durch das Verringern der Soll-Fahrzeugverzögerung zₛₒₗₗ zum vierten Zeitpunkt t₃ federn die Federn an der Vorderachse etwas aus, so dass der Vorderachs-Einfederweg s_{VA} etwas zunimmt. Gleichzeitig federn die Federn an der Hinterachse etwas ein, wodurch sich der Hinderachs-Einfederweg s_{HA} etwas verringert.

Erfüllt der Fahrzustand im weiteren Verlauf des Bremsvorgangs nunmehr die vorgegebene zweite Zustandsbedingung, wird die Soll-Fahrzeugverzögerung zₛₒₗₗ wieder erhöht. Beim hier vorliegenden Ausführungsbeispiel ist die zweite Zustandsbedingung dann erfüllt, wenn die Längsgeschwindigkeit v des Fahrzeugs in etwa gleich Null ist, dass heißt, wenn das Fahrzeug zum Stillstand gekommen ist. Im zweiten Diagramm gemäß Figur 1 ist dies zu einem fünften Zeitpunkt t₄ der Fall. Das Erfüllen dieser zweiten Zustandsbedingung führt dazu, dass die Verzögerungsbestimmungsmittel 8 die Soll-Fahrzeuglängsverzögerung zₛₒₗₗ wieder auf die angeforderte Fahrzeugverzögerung z_{ped} erhöhen. Da diese Erhöhung in der Soll-Fahrzeugverzögerung zₛₒₗₗ nach erreichtem Stillstand des Fahrzeugs erfolgt, kann die Erhöhung ohne Komfortverlust für die Fahrzeuginsassen innerhalb einer sehr kurzen Zeitdauer durchgeführt werden, wodurch der zeitliche Verlauf der Soll-Fahrzeugverzögerung zₛₒₗₗ eine sehr steile ansteigende Flanke erhält. Bei der Erfüllung der zweiten Zustandsbedingung - hier: zum fünften Zeitpunkt t₄ - könnte durch die Verzögerungsmittel 8 sogar eine Sprungfunktion in der Soll-Fahrzeugverzögerung vorgegeben werden.

Wie in Fig. 1 zu sehen wird durch einen solchen zeitlichen Verlauf der Soll-Fahrzeugverzögerung zₛₒₗₗ erreicht, dass sowohl der Vorderachs-Einfederweg s_{VA}, als auch der Hinderachs-Einfederweg s_{HA} nach Erreichen des fünften Zeitpunkts t₄, dass heißt nach Erreichen des Fahrzeugstillstandes, lediglich ein geringfügiges Überschwingen im zeitlichen Verlauf aufweisen und anschließend wieder ihre Anfangswerte einnehmen. Der für die Fahrzeuginsassen spürbare Ruck ist dadurch wesentlich verringert, wodurch sich ein deutlich verbesserter Fahrkomfort für einen Bremsvorgang bis zum Stillstand ergibt.

Insbesondere im Nutzfahrzeugbereich kann das vorliegende Verfahren bzw. die vorliegende Vorrichtung eingesetzt werden, da dort ohnehin der Vorderachs-Einfederweg s_{VA} und/oder der Hinter-achs-Einfederweg s_{HA} ermittelt wird, so dass dann keine zusätzliche Sensorik am Fahrzeug vorgesehen werden muss.

## Patentansprüche

1. Verfahren zur Durchführung eines Bremsvorgangs zur Verminderung des Rucks des Fahrzeugs durch Nickbewegungen bei Erreichen des Stillstands, wobei eine die Soll-Fahrzeugverzögerung (zₛₒₗₗ) beschreibende Verzögerungsgröße (zₛₒₗₗ) verringert wird, wenn der Fahrzustand des Fahrzeugs während des Bremsvorgangs eine erste Zustandsbedingung erfüllt, und wobei die Verzögerungsgröße (zₛₒₗₗ) wieder erhöht wird, wenn der Fahrzustand des Fahrzeugs eine zweite Zustandsbedingung erfüllt,
**dadurch gekennzeichnet,**
**dass** die erste Zustandsbedingung und/oder die zweite Zustandsbedingung vom Vorderachs-Einfederweg (s_{VA}) und/oder vom Hinterachs-Einfederweg (s_{HA}) abhängt.

2. Verfahren nach Anspruch 1,
**dadurch gekennzeichnet,**
**dass** die erste Zustandsbedingung und/oder die zweite Zustandsbedingung von der Längsgeschwindigkeit (v) des Fahrzeugs zum Zeitpunkt (t₁) des Beginns des Bremsvorganges abhängt.

3. Verfahren nach Anspruch 1 oder 2,
**dadurch gekennzeichnet,**
**dass** die erste Zustandsbedingung und/oder die zweite Zustandsbedingung von der angeforderten Verzögerungsgröße (z_{Ped}) abhängt.

4. Verfahren nach einem der Ansprüche 1 bis 3,
**dadurch gekennzeichnet,**
**dass** die Erfüllung der ersten Zustandsbedingung und/oder der zweiten Zustandsbedingung anhand eines vorgegebenen Kennfeldes ermittelt wird.

5. Verfahren nach einem der Ansprüche 1 bis 4,
**dadurch gekennzeichnet,**
**dass** das Verringern der Verzögerungsgröße bei erfüllter erster Zustandsbedingung derart erfolgt, dass die Verzögerungsgröße (zₛₒₗₗ) einen stetigen oder differenzierbaren zeitlichen Verlauf aufweist.

6. Vorrichtung zur Durchführung eines Bremsvorgangs zur Verminderung des Rucks des Fahrzeugs durch Nickbewegungen bei Erreichen des Stillstands, wobei Verzögerungsbestimmungsmittel (8) zur Bestimmung einer die Soll-Fahrzeugverzögerung (zₛₒₗₗ) beschreibenden Verzögerungsgröße (zₛₒₗₗ) vorgesehen sind, die die Verzögerungsgröße (zₛₒₗₗ) verringern, wenn der Fahrzustand des Fahrzeugs während des Bremsvorgangs eine erste Zustandsbedingung erfüllt und die die Verzögerungsgröße (zₛₒₗₗ) wieder erhöhen, wenn der Fahrzustand des Fahrzeugs eine zweite Zustandsbedingung erfüllt,
**dadurch gekennzeichnet,**
**dass** eine Federweg-Sensoranordnung (19) zur Erfassung des Vorderachs-Einfederwegs (s_{VA}) und/oder Hinterachs-Einfederwegs (s_{HA}) vorgesehen ist und ein Vorderachs-Einfederwegsignal und/oder ein Hinterachs-Einfederwegsignal zur Überprüfung der ersten Zustandsbedingung und/oder der zweiten Zustandsbedingung an die Verzögerungsbestimmungsmittel (8) übermittelt.

## Claims

1. A method for carrying out a braking process, in order to reduce the jolt to the vehicle as a result of pitching movements when the stationary state is reached, a deceleration variable (zₛₒₗₗ) which describes the desired vehicle deceleration (zₛₒₗₗ) being reduced when the driving state of the vehicle during the braking process meets a first state condition, and the deceleration variable (zₛₒₗₗ) being increased again when the driving state of the vehicle meets a second state condition, **characterized in that** the first state condition and/or the second state condition depend on the front axle compression travel (s_{VA}) and/or the rear axle compression travel (s_{HA}).

2. The method as claimed in claim 1, **characterized in that** the first state condition and/or the second state condition depend on the longitudinal velocity (v) of the vehicle at the time (t₁) of the start of the braking process.

3. The method as claimed in claim 1 or 2, **characterized in that** the first state condition and/or the second state condition depend on the requested deceleration variable (z_{Ped}).

4. The method as claimed in one of claims 1 to 3, **characterized in that** the fact that the first state condition and/or the second state condition has been met is determined by reference to a predefined characteristic diagram.

5. The method as claimed in one of claims 1 to 4, **characterized in that** the reduction in the deceleration variable when the first state condition is met is carried out in such a way that the deceleration variable (zₛₒₗₗ) has a continuous profile or a profile which can be differentiated over time.

6. A device for carrying out a braking process, in order to reduce the jolt to the vehicle as a result of pitching movements when the stationary state is reached, deceleration determining means (8) being provided for determining a deceleration variable (zₛₒₗₗ) which describes the desired vehicle deceleration (zₛₒₗₗ), said deceleration determining means (8) reducing the deceleration variable (zₛₒₗₗ) when the driving state of the vehicle during the braking process meets a first state condition and increasing the deceleration variable (zₛₒₗₗ) again when the driving state of the vehicle meets a second state condition, **characterized in that** a compression travel sensor array (19) is provided for sensing the front axle compression travel (s_{VA}) and/or rear axle compression travel (s_{HA}) and transmits a front axle compression travel signal and/or a rear axle compression travel signal for checking the first state condition and/or the second state condition to the deceleration determining means (8).

## Revendications

1. Procédé pour réaliser une opération de freinage en vue de réduire les secousses du véhicule provoquées par les mouvements de tangage lorsque le véhicule s'immobilise, une grandeur de ralentissement (zₛₒₗₗ) décrivant le ralentissement de consigne (zₛₒₗₗ) du véhicule étant réduite lorsque l'état de déplacement du véhicule remplit une première condition d'état pendant l'opération de freinage et la grandeur de ralentissement (zₛₒₗₗ) étant de nouveau augmentée lorsque l'état de déplacement du véhicule remplit une deuxième condition d'état, **caractérisé en ce que** la première condition d'état et/ou la deuxième condition d'état dépendent de la course de débattement de l'essieu avant (s_{VA}) et/ou de la course de débattement de l'essieu arrière (s_{HA}).

2. Procédé selon la revendication 1, **caractérisé en ce que** la première condition d'état et/ou la deuxième condition d'état dépendent de la vitesse longitudinale (v) du véhicule au moment (t₁) du début de l'opération de freinage.

3. Procédé selon la revendication 1 ou 2, **caractérisé en ce que** la première condition d'état et/ou la deuxième condition d'état dépendent de la grandeur de ralentissement demandée (z_{Ped}).

4. Procédé selon l'une des revendications 1 à 3, **caractérisé en ce que** le fait que la première condition d'état et/ou la deuxième condition d'état sont satisfaites est déterminé au moyen d'un diagramme caractéristique prédéfini.

5. Procédé selon l'une des revendications 1 à 4, **caractérisé en ce que** la réduction de la grandeur de ralentissement lorsque la première condition d'état est remplie s'effectue de telle sorte que la grandeur de ralentissement (zₛₒₗₗ) présente une courbe dans le temps constante ou différenciable.

6. Dispositif pour réaliser une opération de freinage en vue de réduire les secousses du véhicule provoquées par les mouvements de tangage lorsque le véhicule s'immobilise, des moyens de détermination du ralentissement (8) étant prévus pour déterminer une grandeur de ralentissement (zₛₒₗₗ) décrivant le ralentissement de consigne (zₛₒₗₗ) du véhicule, lesquels réduisent la grandeur de ralentissement (zₛₒₗₗ) lorsque l'état de déplacement du véhicule remplit une première condition d'état pendant l'opération de freinage et augmentent de nouveau la grandeur de ralentissement (zₛₒₗₗ) lorsque l'état de déplacement du véhicule remplit une deuxième condition d'état, **caractérisé en ce qu'**il est prévu un arrangement de capteur de course de ressort (19) destiné à détecter la course de débattement de l'essieu avant (s_{VA}) et/ou la course de débattement de l'essieu arrière (s_{HA}) et qui transmet un signal de débattement de l'essieu avant et/ou un signal de débattement de l'essieu arrière aux moyens de détermination du ralentissement (8) en vue de contrôler la première condition d'état et/ou la deuxième condition d'état.
